# EUROPEAN PATENT APPLICATION

(11) **EP 3 540 641 A1**
(43) Date of publication of application: **18.09.2019**
(21) Application number: 19161897.4
(22) Date of filing: 11.03.2019
(51) Int. Cl.: G06K 9/00

(54) **REAL-TIME MONITORING**

(30) Priority: 14.03.2018 FI 20185244
(71) Applicant: Bliot Oy, 02150 Espoo (FI)
(72) Inventor: HIRVIJÄRVI, Kari, 02150 Espoo (FI); KALLIOKOSKI, Sami, 02150 Espoo (FI)
(74) Representative: Seppo Laine Oy

(57) **Abstract**

In accordance with an example embodiment, there is provided an apparatus comprising means for storing machine learning parameters, and means for using a machine learning classifier and the machine learning parameters to determine, from input comprising at least one image, at least one of the following: safety indication of a construction site, a quality alert at a construction site, a construction complete rate of a construction site and an automatic control action of a construction site device.

## Description

### FIELD

The present invention relates to real-time monitoring of states of processes, such as, for example, construction sites.

### BACKGROUND

Constructions sites are workplaces where workers are at risk of accidents. For example, heavy loads, electrical wiring, heavy machinery and falls present risks of accidents which may result in physical injury. Managing such risks is an important element of workplace safety for construction workers.

Construction sites are also sites where different professionals work at the same time, and ensuring a good quality level of work is relevant from the perspective of characteristics of the resulting building, for example, a well-built structure may exhibit better thermal insulation characteristics than a poorly built structure. Likewise, the likelihood of water leaks or electrical malfunction is reduced where quality is maintained at a good level during construction.

Likewise, construction sites and indeed other sites are managed according to plans, and adhering to a pre-planned completion schedule is beneficial in terms of quality of the end result.

### SUMMARY OF THE INVENTION

According to some aspects, there is provided the subject-matter of the independent claims. Some embodiments are defined in the dependent claims.

According to a first aspect of the present invention, there is provided an apparatus comprising means for storing machine learning parameters, and means for using a machine learning classifier and the machine learning parameters to determine, from input comprising at least one image, at least one of the following: safety indication of a construction site, a quality alert at a construction site, a construction complete rate of a construction site and an automatic control action of a construction site device.

Various embodiments of the first aspect may comprise at least one feature from the following bulleted list:
- the machine learning classifier comprises an artificial neural network
- the apparatus is further configured to use, in the machine learning classifier, at least one supplementary parameter along with the input
- the at least one supplementary parameter comprises at least one of the following: whether electrical voltage is connected in the construction site, whether water pressure is on, and which regulations are applicable
- the input comprises at least one video stream, the at least one image comprised in the at least one video stream.
- the at least one video stream comprises at least two video streams.

According to a second aspect of the present invention, there is provided a method comprising storing machine learning parameters, and using a machine learning classifier and the machine learning parameters to determine, from input comprising at least one image, at least one of the following: a safety indication of a construction site, a quality alert at a construction site, a construction complete rate of a construction site and an automatic control action of a construction site device.

Various embodiments of the second aspect may comprise at least one feature corresponding to a feature from the preceding bulleted list laid out in connection with the first aspect.

According to a third aspect of the present invention, there is provided a method comprising storing machine learning parameters, and using a machine learning classifier and training data to optimize the machine learning parameters, to thereby train the classifier to determine, from input comprising at least one image, at least one of the following: a safety indication of a construction site, a quality alert at a construction site, a construction complete rate of a construction site and an automatic control action of a construction site device.

According to a fourth aspect of the present invention, there is provided a computer program configured to cause a method in accordance with either one of the second and third aspects to be performed.

According to a fifth aspect of the present invention, there is provided an apparatus comprising at least one processing core, at least one memory including computer program code, the at least one memory and the computer program code being configured to, with the at least one processing core, cause the apparatus at least to store machine learning parameters, and use a machine learning classifier and the machine learning parameters to determine, from input comprising at least one image, at least one of the following: a safety indication of a construction site, a quality alert at a construction site, a construction complete rate of a construction site and an automatic control action of a construction site device.

Various embodiments of the fifth aspect may comprise at least one feature corresponding to a feature from the preceding bulleted list laid out in connection with the first aspect.

According to a sixth aspect of the present invention, there is provided a non-transitory computer readable medium having stored thereon a set of computer readable instructions that, when executed by at least one processor, cause an apparatus to at least store machine learning parameters, and use a machine learning classifier and the machine learning parameters to determine, from input comprising at least one image, at least one of the following: a safety indication of a construction site, a quality alert at a construction site, a construction complete rate of a construction site and an automatic control action of a construction site device

### BRIEF DESCRIPTION OF THE DRAWINGS

FIGURE 1 illustrates an example embodiment in accordance with at least some embodiments of the present invention;
FIGURE 2 illustrates an example apparatus capable of supporting at least some embodiments of the present invention, and
FIGURE 3 is a flow graph of a method in accordance with at least some embodiments of the present invention.

### EMBODIMENTS

In a construction site or another safety relevant setting, a machine learning solution is employed to improve site safety. A machine learning classifier, for example an artificial neural network, is trained with training material simulating safe and/or unsafe conditions, and subsequently the trained machine learning solution is fed input data from a construction site, wherein the input comprises video stream, for example. The machine learning solution classifies the input and provides outputs, which may comprise indications relating to safety, quality and/or completion rate, for example. In some cases, the outputs may comprise automatically triggered control actions. Real-time processing of the input may be provided.

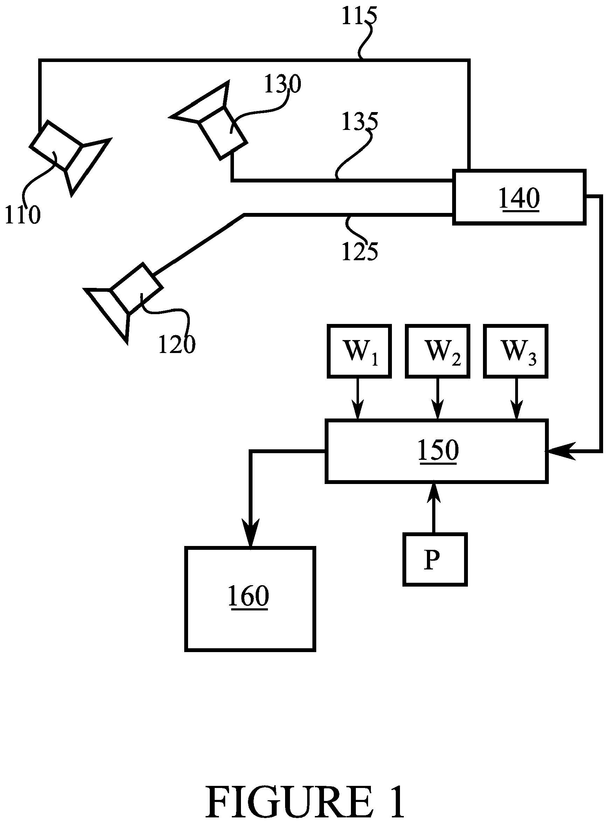

FIGURE 1 illustrates an example embodiment in accordance with at least some embodiments of the present invention. Cameras 110, 120 and 130 may comprise video or still cameras. The cameras need not be of a same type, and the number of cameras is not limited to three, rather, embodiments may be usable with one, two, three, or more than three cameras, depending on the implementation. Camera types usable include, for example, surveillance cameras statically installed in a construction site, helmet-mounted cameras, smart glasses comprising at least one camera, and drone cameras installed on drones which may hover or fly over a construction site. Cameras may be colour cameras or black-and-white cameras. Cameras may be configured to obtain a video stream, occasional still images or something in between these extremes. For example, a video stream may have a frame rate of 30 frames per second, fps, a surveillance camera may capture one image per second, or one frame per minute. Cameras may be configured to produce a digital or analogue signal.

Cameras 110, 120 and 130 may be operably connected with pre-processor 140, via connections 115, 125 and 135. These connections need not be of the same type, and may comprise wireless and/or wire-line connections. Examples of suitable technologies include wireless local area network, WLAN, Bluetooth, co-axial cables and cellular connectivity, for example via long term evolution, LTE, or wideband code division multiple access, WCDMA. In the case of cellular connectivity, the connections may traverse a cellular network, which is not illustrated in FIGURE 1 for the sake of clarity.

Pre-processor 140 may be configured to prepare the outputs of cameras 110, 120 and 130 for input into a machine learning classifier 150. Examples of suitable pre-processing include analogue-to-digital conversion of analogue camera signals and sampling a video stream to produce a frame rate the machine learning classifier 150 may accept. For example, a video stream with 25 fps may be sampled to feed two samples per second to machine learning classifier 150. Pre-processing may alternatively or in addition comprise conversion to black and white, contrast enhancement and/or selecting which camera or cameras to use. In some embodiments, pre-processor 140 is absent. In some embodiments, a distinct pre-processor 140 is provided for each camera. In some embodiments, pre-processor 140 is comprised in a same apparatus as machine learning classifier 150, wherein it may even run on same computational substrate as machine learning classifier 150.

Machine learning classifier 150 may comprise, as noted above, an artificial neural network. An example of a suitable artificial neural network type is a hybrid neural network which comprises a convolutional neural network, CNN, part for image recognition and a non-convolutional part, or two distinct convolutional parts. A CNN may comprise, in addition to convolutional layers, at least one or two fully connected layers. Other examples of machine learning classifiers include kernel estimators, support vector machines and linear classifiers. Machine learning classifier 150 may be run on a suitable computational substrate, such as, for example, an on-site server or laptop or, alternatively or in addition, in a cloud server remote from the site.

In some embodiments, a distinct artificial neural network is run for each camera in operation. In these embodiments, a further artificial neural network may be employed to receive as its input the outputs of the artificial neural networks run for the cameras. This further artificial neural network may be trained to classify situations based on more than one viewpoint. For example, a certain situation, seen in one camera, may be safe or dangerous in dependence of other considerations may be determined based on the output of another camera. An example of this is the lifting and moving of a heavy load, which may be considered dangerous if persons are below the trajectory of the load. The fact that a lifting is ongoing may be determined based on one camera, and the presence or absence of persons under the trajectory may be determined based on another camera. This technical effect may be obtained from using two cameras as input, also in case both video stream inputs are connected directly with the same artificial neural network.

Machine learning classifier 150 may be configured to determine, for an input, at least one of a momentary safety level of a construction site, a safety alert at a construction site, a quality alert at a construction site, a construction complete rate of a construction site and an automatic control action of a construction site device. The safety level of a construction site and the safety alert are examples of safety indications.

A momentary safety level determination may be seen as a measurement of a technical variable of the construction site or a sector thereof, the technical variable being a presence or absence of danger of an accident. In some embodiments, the classifier may be configured to output one of a range of safety levels as output, as a response to the input. A safety alert may correspond to a situation where high danger of an accident is predicted or present. Such an alert may be provided in a suitable auditory and/or visual format, for example. As a specific example, the alert may be provided via headphones work by workers, or to one specific worker most in-scope of the foreseen accident.

Previously, a safety audit has been performed in construction sites, for example weekly, which provides a snapshot of a safety level. However, the relevance of an audit is quickly reduced as equipment and persons move about a construction site, wherefore a real-time constantly or regularly updated safety level determination provides a clear enhancement in safety, which is beneficial.

A safety alert may be provided, for example, where the machine learning classifier determines there is a worker on the construction site who is not wearing personal safety equipment, such as, for example, a helmet and/or protective goggles. Likewise, absence of fall protection devices may trigger a safety alert. An example of a fall protection device is a fence. The system may be configured to analyse, for example, personal risk taking and the use of protective equipment, walkways, ladders, machinery, equipment, fall protection, electricity and lighting conditions and/or the order and maintenance of the site. An alert may be provided to a specific worker, such as the one not wearing the personal safety equipment, or to all workers in the site, or a sector of the site.

The machine learning classifier may be trained to recognize the safety levels and/or the high danger of accident using training data which includes pre-classified image data of safe and unsafe situations. The unsafe situations may be simulated or carefully staged, to avoid danger to persons while preparing the training data. In some cases, image data that captures an actual accident may be included in the training data. Images from different angles, with equipment and elements of different colours and captured near and far from the relevant areas may be used, to enhance the results of training the machine learning classifier. As a result of the training, weights W₁ may be obtained, which may be used in live situations to produce, for example, real-time information of safety level. Training data need not be construction site specific as similar safety issues may be present in construction sites in general.

A quality alert may be provided in case a worker is in the process of making an error in his work which impacts quality of a building. For example, poorly installed insulation results in heat losses during the winter, an incorrectly installed water pipe may spring a leak, which damages concrete, and incorrectly installed electrical wiring may be a fire hazard. Further examples of potential targets of quality monitoring include the building frame structure, painting and interior work.

The machine learning classifier may be trained to recognize the worker is about to make an error, and thus to trigger a quality alert, by producing pre-classified training data representing correct and incorrect installation procedures. A helmet camera of a worker may be well suited to imaging what he is in the process of doing, and work with electrical wiring and piping, for example, may be clear and well suited for machine recognition. When the machine learning classifier is trained using such training data, weights W₂ may be obtained, which may be used in live situations to produce the quality alerts.

A construction complete rate may be estimated by comparing images obtained from the construction site to data from a building information model, BIM, for example, to determine, for example without user intervention, how far along the construction project is. For example, wall elements may be image-recognized from camera data, and thus may be compared to BIM and/or place information to obtain an estimate construction complete rate.

The machine learning classifier may be trained to trigger an automatic control action. An automatic control action may comprise, for example, preventing movement of machinery when a person is within an arc of motion of the movement. In such a case, information may be provided to workers as to why the movement was prevented, as otherwise they may be puzzled, why the machinery does not seem to work. Another example of an automatic control action is automatic switching on of lights, in case an area of a construction site is determined, based on the input data to the machine learning classifier, to be too dark for safely working in. A third example of an automatic control action is the opening of an access gate responsive to a determination that a worker seeking access is wearing his personal safety equipment.

Personal safety equipment may be clearly and brightly coloured, which makes its detection using machine image recognition easier and more dependable. On the other hand, the opening of an access gate may be prevented in case some of the personal safety equipment seems to be missing. Here, too, an indication may be given as to why the gate doesn't open.

The machine learning classifier may be trained to initiate automatic control actions by preparing suitable training data, such as images of workers wearing and not wearing their personal safety equipment, such as helmets and/or goggles. Likewise, dark areas may be photographed and included in the training material, and moving machinery may be included in the training material to enable determinations relating to dangers they may pose. Weights W₃ may be used to classify input images as ones representing situations which merit triggering an automatic control action.

In various embodiments, not all of the weights illustrated in FIGURE 1 need be used. Indeed, in some embodiments only weights W₁ are used, in some embodiments only weights W₂ are used, in other embodiments only weights W₃ are used. In some embodiments, weights W₁ and W₂ are used but not W₃. In others, weights W₂ and W₃ are used, but not weights W₁. In other embodiments, weights W₁ and W₃ are used but not weights W₂. In some embodiments, all the three weights are used. The weights are examples of machine learning parameters. In general, machine learning parameters define the structure and determine the functioning of the machine learning classifier, for example an artificial neural network. Consequently, weights, such as, for example W₁, define the structure of an artificial neural network and the applied amplitudes, such as filter coefficients, used in propagating information through the network. The weights are, in general, machine learning parameters. Training the weights may comprise adjusting the amplitudes only, the structure itself of the network may be pre-selected before the training procedure.

In addition to the camera data from cameras 110, 120 and 130, the machine learning classifier may, optionally, receive input supplementary parameters P. These parameters may comprise some site-relevant characteristics, such as whether electrical power has been connected, whether water pressure is on or off, and/or which regulations are applicable to the constructions site. When used, the parameters P may be used also during training of the machine learning classifier. Output 160 comprises, as described above, at least one of the momentary safety level of a construction site, a safety alert at a construction site, a quality alert at a construction site, a construction complete rate of a construction site and an automatic control action of a construction site device. Output 160 may comprise real-time reporting of observations and/or classifications made by machine learning classifier 150.

The training of machine learning classifier 150 may be based, for example, on minimization of a loss function. A loss function may be a function of the machine learning parameters, wherefore its minimization may thus become a multidimensional minimization problem, which is well known in mathematics. For example, the gradient descent method, Newton's method or the Levenberg-Marquardt algorithm may be employed to find the machine learning parameters values that correspond to a minimum of the loss function, and which therefore are the optimized machine learning parameters. Backpropagation may be employed, where appropriate, to improve the training process.

In general, the training may comprise a method which comprises storing machine learning parameters, and using a machine learning classifier and training data to optimize the machine learning parameters, to thereby train the classifier to determine, from input comprising at least one image, at least one of the following: a momentary safety level of a construction site, a safety alert at a construction site, a quality alert at a construction site, a construction complete rate of a construction site and an automatic control action of a construction site device.

Optionally, input data to classifier 150 may be stored in a suitable data storage entity. This data may be usable for re-training the classifier at a later point in time, to adapt to changing use patterns in the area. For example, in case an accident takes place and the circumstances preceding the accident are present in the input data, this may be used in training the machine learning classifier 150 and/or other similar machine learning classifiers.

In various embodiments, the classifier parameters may be re-trained periodically, such as monthly, quarterly or annually, for example, to take account of changes in construction habits, and to enable integration of the classification with new kinds of equipment or regulations which become available. Initially, when the classifier parameters have not yet been trained for a specific area, classifier parameters trained for another area, such as a different country, may be used.

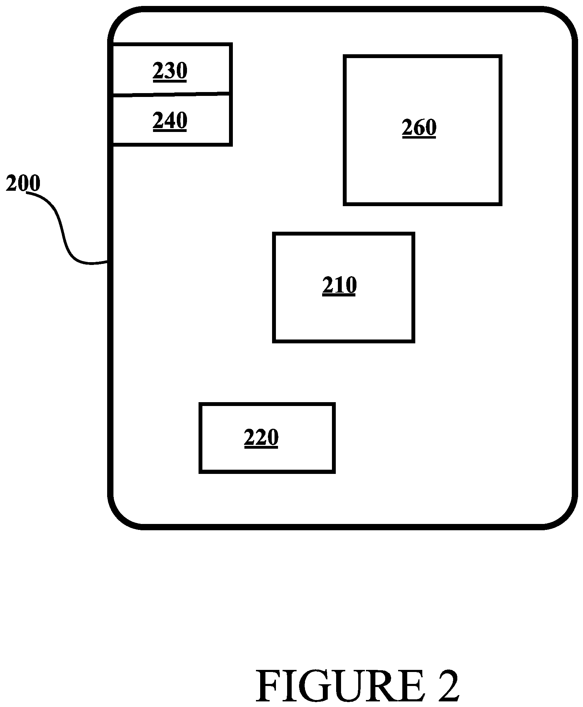

FIGURE 2 illustrates an example apparatus capable of supporting at least some embodiments of the present invention. Illustrated is device 200, which may comprise, for example, a device running machine learning classifier 150 of FIGURE 1. Comprised in device 200 is processor 210, which may comprise, for example, a single- or multi-core processor wherein a single-core processor comprises one processing core and a multi-core processor comprises more than one processing core. Processor 210 may comprise, in general, a control device. Processor 210 may comprise more than one processor. Processor 210 may be a control device. A processing core may comprise, for example, a Cortex-A8 processing core manufactured of ARM Holdings or a Steamroller processing core produced by Advanced Micro Devices Corporation. Processor 210 may comprise at least one AMD Opteron and/or Intel Xeon processor. Processor 210 may comprise at least one application-specific integrated circuit, ASIC. Processor 210 may comprise at least one field-programmable gate array, FPGA. Processor 210 may be means for performing method steps in device 200. Processor 210 may be configured, at least in part by computer instructions, to perform actions.

Device 200 may comprise memory 220. Memory 220 may comprise random-access memory and/or permanent memory. Memory 220 may comprise at least one RAM chip. Memory 220 may comprise solid-state, magnetic, optical and/or holographic memory, for example. Memory 220 may be at least in part accessible to processor 210. Memory 220 may be at least in part comprised in processor 210. Memory 220 may be means for storing information. Memory 220 may comprise computer instructions that processor 210 is configured to execute. When computer instructions configured to cause processor 210 to perform certain actions are stored in memory 220, and device 200 overall is configured to run under the direction of processor 210 using computer instructions from memory 220, processor 210 and/or its at least one processing core may be considered to be configured to perform said certain actions. Memory 220 may be at least in part comprised in processor 210. Memory 220 may be at least in part external to device 200 but accessible to device 200.

Device 200 may comprise a transmitter 230. Device 200 may comprise a receiver 240. Transmitter 230 and receiver 240 may be configured to transmit and receive, respectively, information in accordance with at least one cellular or non-cellular standard. Transmitter 230 may comprise more than one transmitter. Receiver 240 may comprise more than one receiver. Transmitter 230 and/or receiver 240 may be configured to operate in accordance with wireless local area network, WLAN, Ethernet and/or worldwide interoperability for microwave access, WiMAX, standards, for example.

Device 200 may comprise user interface, UI, 260. UI 260 may comprise at least one of a display, a keyboard, a touchscreen, a vibrator arranged to signal to a user by causing device 200 to vibrate, a speaker and a microphone. A user may be able to operate device 200 via UI 260, for example to configure safety alert parameters.

Processor 210 may be furnished with a transmitter arranged to output information from processor 210, via electrical leads internal to device 200, to other devices comprised in device 200. Such a transmitter may comprise a serial bus transmitter arranged to, for example, output information via at least one electrical lead to memory 220 for storage therein. Alternatively to a serial bus, the transmitter may comprise a parallel bus transmitter. Likewise processor 210 may comprise a receiver arranged to receive information in processor 210, via electrical leads internal to device 200, from other devices comprised in device 200. Such a receiver may comprise a serial bus receiver arranged to, for example, receive information via at least one electrical lead from receiver 240 for processing in processor 210. Alternatively to a serial bus, the receiver may comprise a parallel bus receiver. Device 200 may have network connections to the Internet, for example.

Device 200 may comprise further devices not illustrated in FIGURE 2. For example, where device 200 comprises a server computer, it may comprise at least one duplicated hard drive system. Device 200 may comprise a fingerprint sensor arranged to authenticate, at least in part, a user of device 200. In some embodiments, device 200 lacks at least one device described above. Where device 200 is a server computer, it may communicate over a network and/or an Internet connection with a client computer to facilitate the user interface UI 260 and the authentication interface like the fingerprint reader through the client computer. The server computer may also be a virtual machine in the cloud, such as amazon web service, AWS, instance or Microsoft Azure instance.

Processor 210, memory 220, transmitter 230, receiver 240 and/or UI 260 may be interconnected by electrical leads internal to device 200 in a multitude of different ways. For example, each of the aforementioned devices may be separately connected to a master bus internal to device 200, to allow for the devices to exchange information. However, as the skilled person will appreciate, this is only one example and depending on the embodiment various ways of interconnecting at least two of the aforementioned devices may be selected without departing from the scope of the present invention.

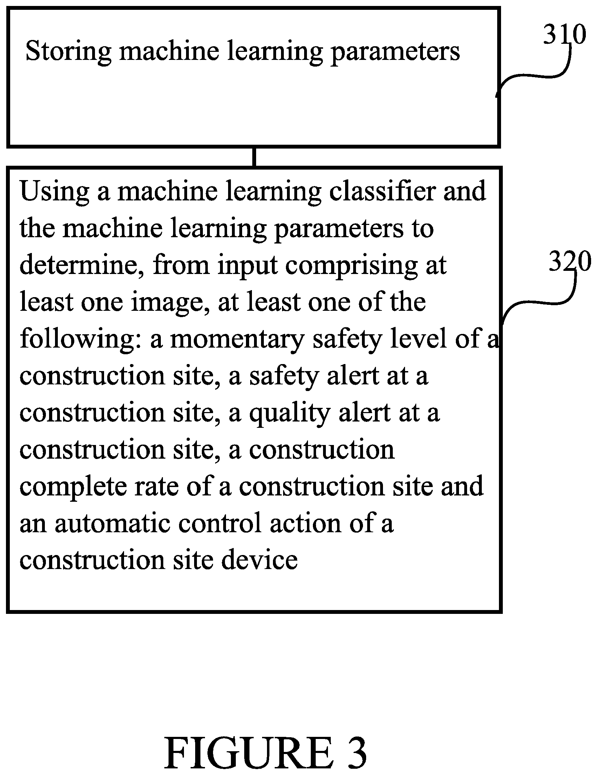

FIGURE 3 is a flow graph of a method in accordance with at least some embodiments of the present invention. The phases of the illustrated method may be performed in a device configured to run the machine learning classifier 150 of FIGURE 1, for example, or in a control device configured to control the functioning thereof, when installed therein.

Phase 310 comprises storing machine learning parameters. Phase 320 comprises using a using a machine learning classifier and the machine learning parameters to determine, from input comprising at least one image, at least one of the following: a momentary safety level of a construction site, a safety alert at a construction site, a quality alert at a construction site, a construction complete rate of a construction site and an automatic control action of a construction site device.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in optimizing the operation of utility delivery networks, for example in case of failure conditions.

### ACRONYMS LIST

- BIM: building information model
- CNN: convolutional neural network
- fps: frames per second
- LTE: long term evolution
- WCDMA: wideband code division multiple access
- WLAN: wireless local area network

**REFERENCE SIGNS LIST**

| | |
|---|---|
| 110, 120, 130 | Camera |
| 115, 125, 135 | Connections |
| 140 | Pre-processor |
| 150 | Machine learning classifier |
| 160 | Output |
| 200 - 260 | Structure of the device of FIGURE 2 |
| 310 - 320 | Phases of the method of FIGURE 3 |

## Claims

1. A construction site monitoring apparatus comprising:
- means for storing machine learning parameters, and
- means for using a machine learning classifier and the machine learning parameters to determine, in real time, from input comprising at least two video streams, at least one of the following: safety indication of a construction site, a quality alert at a construction site, a construction complete rate of a construction site and an automatic control action of a construction site device.

2. The apparatus according to claim 1, wherein the machine learning classifier comprises an artificial neural network.

3. The apparatus according to claim 1 or 2, wherein the apparatus is further configured to use, in the machine learning classifier, at least one supplementary parameter along with the input.

4. The apparatus according to claim 3, wherein the at least one supplementary parameter comprises at least one of the following: whether electrical voltage is connected in the construction site, whether water pressure is on, and which regulations are applicable.

5. The apparatus according to any of claims 1 - 4, wherein at least one of the video streams originates in a helmet mounted camera, a smart glasses camera or a drone camera.

6. A construction site monitoring method comprising:
- storing machine learning parameters, and
- using a machine learning classifier and the machine learning parameters to determine, in real time, from input comprising at least two video streams, at least one of the following: a safety indication of a construction site, a quality alert at a construction site, a construction complete rate of a construction site and an automatic control action of a construction site device.

7. The method according to claim 6, wherein the machine learning classifier comprises an artificial neural network.

8. The method according to claim 6 or 7, further comprising using, in the machine learning classifier, at least one supplementary parameter along with the input.

9. The method according to claim 8, wherein the at least one supplementary parameter comprises at least one of the following: whether electrical voltage is connected in the construction site, whether water pressure is on, and which regulations are applicable.

10. The method according to any of claims 6 - 9, wherein at least one of the video streams originates in a helmet mounted camera, a smart glasses camera or a drone camera.

11. A construction site monitoring method comprising:
- storing machine learning parameters, and
- using a machine learning classifier and training data to optimize the machine learning parameters, to thereby train the classifier to determine, in real time, from input comprising at least two video streams, at least one of the following: a safety indication of a construction site, a quality alert at a construction site, a construction complete rate of a construction site and an automatic control action of a construction site device.

12. A computer program configured to cause a method in accordance with either: one of claims 6 - 10 or claim 11 to be performed.
